# EUROPÄISCHE PATENTSCHRIFT

(11) **EP 1 123 612 B1**
(45) Veröffentlichungstag und Bekanntmachung des Hinweises auf die Patenterteilung: **05.03.2008**
(21) Anmeldenummer: 99948988.3
(22) Anmeldetag: 14.10.1999
(51) Int. Cl.: H04L 25/49, H04L 25/38

(54) **DATENÜBERTRAGUNGSVERFAHREN**
DATA TRANSMISSION METHOD
PROCEDE DE TRANSMISSION DE DONNEES

(30) Priorität: 20.10.1998 DE 19848211
(43) Veröffentlichungstag der Anmeldung: 16.08.2001
(73) Patentinhaber: Honeywell Technologies Sarl, 1110 Morges (CH)
(72) Erfinder: KELLER, Manfred, D-96242 Sonnefeld (DE); BIENERT, Renke, D-71101 Schönaich (DE); WURSTHORN, Ulrich, D-78050 VS-Villingen (DE)
(74) Vertreter: TBK-Patent
(86) Internationale Anmeldenummer: PCT/EP1999/007727
(87) Internationale Veröffentlichungsnummer: WO 2000/024172

(56) Entgegenhaltungen:
- EP-A- 0 622 711
- DE-A- 3 625 878
- US-A- 4 361 876
- US-A- 4 605 921
- US-A- 4 661 965
- US-A- 4 876 740

## Beschreibung

Die vorliegende Erfindung bezieht sich auf ein Verfahren zur asynchronen seriellen Datenübertragung nach dem Gattungsbegriff des Patentanspruches 1.

In diesem Zusammenhang ist es bekannt, den zwischen einem Sender und einem Empfänger übertragenen Nutzdaten, eine Trägererkennung und Synchronisation vorauszuschicken. Die Trägererkennung signalisiert dem Empfänger, daß eine Nachricht gesendet wird, und die Synchronisation dient dazu, auf den Beginn der Nutzdaten, d.h. auf das diesen vorangestellte Startbit zu synchronisieren.

Die einfachste Form der Synchronisation von Sender- und Empfänger wird bei der asynchronen Übertragung angewendet. Der Sender- und der Empfängertakt müssen dabei nur annähernd gleiche Frequenz aufweisen. Die übertragenen Datenworte besitzen ein festes Format und werden zusätzlich mit einem Startbit und einem Stoppbit versehen. Der Empfängertakt wird mit der negativen Flanke des Startbits synchronisiert, und die weiteren Bits werden in der zeitlichen Bitmitte abgetastet.

Die asynchrone Datenübertragung kann zudem mit preiswerten Standard-Bausteinen erfolgen, wie sie am Markt durch verschiedene Hersteller in Form von UART's (Universal Asynchronus Receiver Transmitter) angeboten werden. Diese weisen interne Taktgeber auf, an deren zeitliche Konstanz keine besonders großen Anforderungen gestellt werden, weil der Takt jeweils zu Beginn eines Zeichens, also im allgemeinen nach der Übertragung von 10 Bit neu synchronisiert wird. Es ist daher lediglich erforderlich, daß das Stoppbit noch im Bitbereich abgetastet wird.

Bei der Datenübertragung ist es ferner von Bedeutung, daß die Sende-/Empfangselektronik einen konstanten Arbeitspunkt besitzt und nicht etwa durch längere Null- oder Eins-Folgen der Zeichenkodierung eine Arbeitspunktverschiebung erfährt. Um dies zu gewährleisten, könnte man gleichstromfreie Codierungs-Formate verwenden, die aber teilweise zu kompliziert und durch UART' nicht auswertbar sind.

Hierzu offenbart das Dokument US-A-4 605 921 ein Verfahren zur asynchronen seriellen Datenübertragung mit Datenrahmen, die jeweils durch ein Start- und Stoppbit eingerahmt sind, wobei einschließlich des Start- und Stopbits eine gleiche Anzahl von 0- und 1-Bits vorliegt.
Desweiteren offenbart das Dokument US-A-4 661 965 eine dreiteilige Rahmenstruktur mit einer gleichen Anzahl von 0- und 1 Bits, wobei Start- und Stopbits im Trägererkennungsrahmen fehlen.

Es ist daher die Aufgabe der vorliegenden Erfindung, ein Datenübertragungsverfahren anzugeben, das bei einem einfachen Codierungs-Format einen konstanten Arbeitspunkt der Sende-/Empfangs-Elektronik gewährleistet.

Die Lösung dieser Aufgabe gelingt gemäß den kennzeichnenden Merkmalen des Patentanspruches 1. Weitere vorteilhafte Ausgestaltungen des erfindungsgemäßen Verfahrens sind den abhängigen Ansprüchen entnehmbar.

Anhand eines in den Figuren der beiliegenden Zeichnung dargestellten Ausführungsbeispieles sei die Erfindung im folgenden näher erläutert. Es zeigen:
- Figur 1: die Zusammensetzung des übertragenen Datenstromes;
- Figur 2: die grundsätzliche Zeichencodierung;
- Figur 3: die Codierung der Trägererkennung;
- Figur 4: die Codierung des Synchronisationszeichens; und
- Figur 5: die Codierung der Nutzdaten.

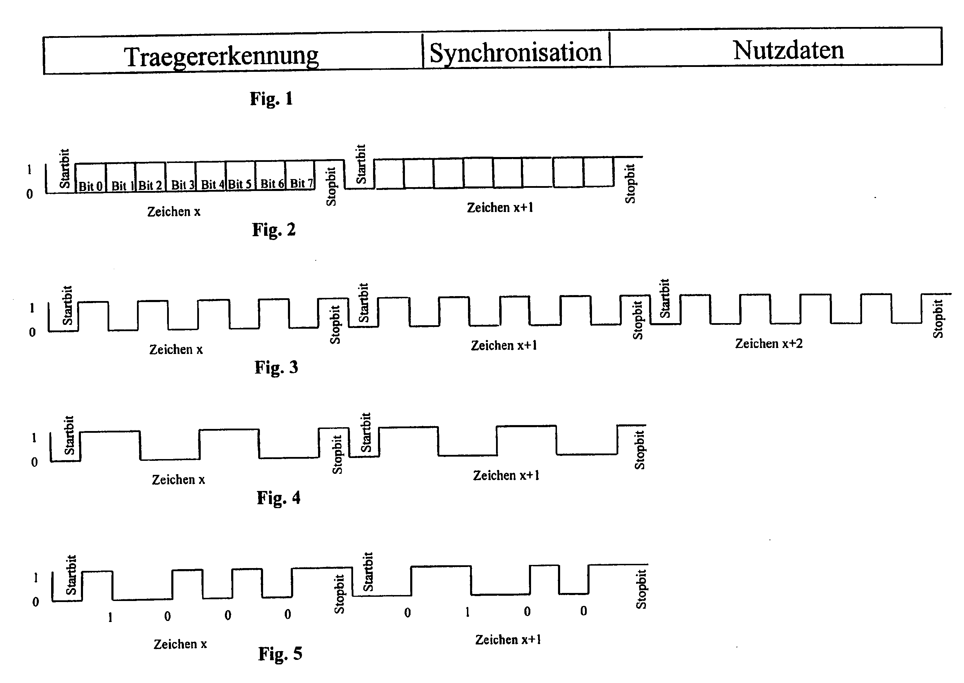

Gemäß Figur 1 setzt sich der bei dem Übertragungsverfahren verwendete Bitstrom in bekannter Weise aus einer Trägererkennung, einer Synchronisation und den Nutzdaten zusammen. Jeder Teil dieses Bitstromes setzt sich gemäß Figur 2 aus einem Zeichen mit einer Breite von 10 Bit zusammen, wobei das erste Bit ein Startbit und das letzte Bit ein Stoppbit ist. Das Startbit wird durch eine "O" repräsentiert und das Stoppbit wird durch eine "1" repräsentiert. Dazwischen liegen acht Informationsbit des Zeichens.

Gemäß Figur 3 ist die Trägererkennung gemäß dem Hexadezimalcode 55 codiert, d.h. Einsen und Nullen wechseln sich gegenseitig ab. Die Bitrate beträgt z.B. 9.600 Baud, was einer Frequenz von 4,8 kHz entspricht. Mit dieser Bitrate bzw. Frequenz arbeitet auch der interne Taktgeber in dem UART bei der Abtastung der Zeichenbits.

Gemäß Figur 4 ist das Synchronisationszeichen mit dem Hexadezimalcode 33 codiert, d.h. auf zwei Einsen folgen jeweils zwei Nullen usw. Dieser Code ist symmetrisch, was die Anzahl der Einsen und Nullen anbelangt, so daß der Gleichstrompegel bzw. der Arbeitspunkt der Empfangselektronik im Mittel keine Änderung erfährt, wobei die Frequenz von 2,4kHz für eine Funkübertragung noch geeignet hoch ist. Zudem ist das Synchronisationszeichen so gewählt, daß sein Bitmuster in den Nutzdaten nicht vorkommt.

Gemäß Figur 5 erfolgt die Codierung der Nutzdaten gemäß einer Manchester-Codierung (Bi-Phase-Format), bei der sowohl die Nullen als auch die Einsen durch Impulse codiert sind, die jedoch innerhalb eines Bitrahmens zu unterschiedlichen Zeitpunkten auftreten. Eine Eins wird z.B. dargestellt durch einen Rechteckimpuls der halben Schrittdauer, der in der ersten Hälfte des für die Darstellung eines Bits zur Verfügung stehenden Zeitabschnitts liegt. Zur Darstellung der Null wird der gleiche Impuls verwendet, der dabei in der zweiten Hälfte des Zeitabschnitts liegt. Bei dem Manchester-Code ist somit auch bei "O"- und "1 "-Folgen die Übertragung der Taktinformation gesichert, und es ist eine Unterscheidung zwischen der Übertragung einer Nullfolge und keine Übertragung möglich. Das Signal ist zwar nicht gleichstromfrei, besitzt aber gemittelt den gleichen Pegel.

Da jede Null oder Eins durch einen Impuls mit halber Schrittweite der Trägerfrequenz von 4,8 kHz codiert ist, kann ein Byte mit 8 Bit nicht in einem Zeichen codiert werden; vielmehr werden zwei Zeichen mit jeweils vorangehendem Startbit und abschließendem Stoppbit für die Übertragung eines Bytes benötigt, was eine Besonderheit der vorliegenden Erfindung darstellt.

Im in Figur 5 dargestellten Beispiel ist z.B. das Nutzdatum im Hexadezimalcode 21 codiert.

## Patentansprüche

1. Verfahren zur asynchronen, seriellen Datenübertragung zwischen einem Sender und einem Empfänger, über eine Funk-Übertragungsstrecke, wobei dem Nutz-Datenrahmen ein Synchronisations-Datenrahmen und ein Trägererkennungs-Datenrahmen vorgeordnet ist und die Datenrahmen jeweils durch ein Start- und ein Stoppbit am Anfang und Ende eingerahmt sind, **gekennzeichnet durch** eine Codierung aller Datenrahmen dergestalt, daß einschließlich des Start-und Stoppbits eine gleiche Anzahl von 0- und 1-Bits vorliegt, wobei die Codierung der Trägererkennung **durch** die Bitrate der Informationsübertragung vorgegeben ist, wobei der Synchronisations-Datenrahmen eine Codierung gemäß der halben Bitrate aufweist und wobei der Nutz-Datenrahmen gemäß einer Manchester-Codierung codiert ist.

2. Verfahren nach Anspruch 1, **dadurch gekennzeichnet , daß** die Codierung der Nutzdaten durch jeweils zwei hintereinander übertragene Halbbytes von vier Manchester-codierten Bits erfolgt, wobei jedes Halbbyte durch ein Start- und Stoppbit eingerahmt ist

3. Verfahren nach Anspruch 1 oder 2, **gekennzeichnet durch** eine Codierung der Trägererkennung gemäß dem Hexadezimalcode 55 und eine Codierung des Synchronisationszeichens gemäß dem Hexadezimalcode 33.

4. Verfahren nach einem der vorangehenden Ansprüche, **gekennzeichnet durch** die Verwendung von UART's zur Verarbeitung von 10-Bit-Rahmen mit jeweils einem Startbit, acht Datenbits und einem Stoppbit, wobei die Frequenz des internen Taktgebers des UART's auf die Bitrate der Trägererkennung abgestimmt ist.

## Claims

1. A method for asynchronous serial data transmission between a transmitter and receiver, via a radio transmission path, with the user data frame being preceded by a synchronization data frame and a carrier identification data frame, and the data frames each being enclosed by a start bit and stop bit at the start and end, distinguished by all the data frames being coded in such a way that there are an identical number of 0 bits and 1 bits, including the start and stop bits, wherein the carrier identification is coded by means of the bit rate of the information transmission, wherein the synchronization data frame has a coding based on half the bit rate, and wherein the user data frame is coded using Manchester coding.

2. The method as claimed in claim 1, wherein the user data is in each case coded by two half bytes comprising four Manchester-coded bits transmitted sequentially, with each half-byte being enclosed by a start bit and a stop bit.

3. The method as claimed in claim 1 or 2, distinguished by the carrier identification being coded based on the hexadecimal code 55, and the synchronization character being coded based on the hexadecimal code 33.

4. The method as claimed in one of the preceding claims, distinguished by the use of UARTs for processing 10-bit frames each having a start bit, 8 data bits and a stop bit, with the frequency of the internal clock of the UART being matched to the bit rate of the carrier identification.

## Revendications

1. Procédé pour la transmission sérielle asynchrone de données entre un émetteur et un récepteur par l'intermédiaire d'une liaison hertzienne, selon lequel la trame de données utiles est précédée d'une trame de données de synchronisation et d'une trame de données de détection de support, et les trames de données sont encadrées au début et à la fin par un bit de départ et un bit d'arrêt,
**caractérisé par** un codage de toutes les trames de données qui est tel qu'il y a un nombre égal de bits 0 et de bits 1, bit de départ et bit d' arrêt compris, le codage de la détection de support étant prédéfini par le débit binaire de la transmission d'informations, la trame de données de synchronisation comportant un codage selon la moitié du débit binaire, et la trame de données utiles étant codée selon un codage de Manchester.

2. Procédé selon la revendication 1, **caractérisé en ce que** le codage des données utiles se fait grâce à deux demi-octets, transmis l'un après l'autre, de quatre bits à codage de Manchester, chaque demi-octet étant encadré par un bit de départ et un bit d'arrêt.

3. Procédé selon la revendication 1 ou 2, **caractérisé par** un codage de la détection de support selon le code hexadécimal 55 et par un codage du signe de synchronisation selon le code hexadécimal 33.

4. Procédé selon l'une des revendications précédentes, **caractérisé par** l'utilisation de circuits UART (circuits récepteurs-émetteurs asynchrones universels) pour traiter des trames de 10 bits comportant chacune un bit de départ, huit bits de données et un bit d'arrêt, la fréquence de l'horloge interne du circuit UART étant adaptée au débit binaire de la détection de support.
